# EUROPEAN PATENT APPLICATION

(11) **EP 1 394 456 A1**
(43) Date of publication of application: **03.03.2004**
(21) Application number: 03019233.0
(22) Date of filing: 26.08.2003
(51) Int. Cl.: F16L 9/147, F16L 55/165, B29C 63/34, B32B 15/04, B32B 1/08

(54) **Plastic lined metal pipe and method of manufacture**

(30) Priority: 26.08.2002 AR 0203202
(71) Applicant: Formar S.A., Buenos Aires C1282AFT (AR)
(72) Inventor: Trivelli, Enrique, C1282AFT - Buenos Aires (AR)
(74) Representative: COHAUSZ & FLORACK

(57) **Abstract**

A composite pipe formed by a metallic pipe with inner lining, in particular of plastic material, resistant to corroding agents, wherein the inner lining is constituted by a prefabricated plastic material sleeve which is expanded inside the metallic pipe to abut its inner surface, interposing an adhesive means capable of transmitting mechanical loads to transmit the internal pressure in the plastic material sleeve to the metallic pipe, preventing collapse of the plastic material sleeve when lacking internal pressure. Also, a method for manufacturing said composite pipe and its use.

## Description

This invention relates to a composite pipe formed by; a metallic pipe with inner lining of plastic material, which is resistant to corroding agents due to the plastic material properties, but which also has resistance to internal and external pressure mainly defined by the metallic pipe characteristics.

This invention also relates to a method to manufacture said composite pipe.

Up to date the inner lining of metallic tubes, for example for steel pipelines, constitutes a labor-consuming and expensive work. This lining is generally carried out using nylon or epoxi paints curable at low temperatures, about 65°C, applying the powdered resin by means of electrostatic systems and heating the pipe up to about 200°C, or using phenolic epoxi curable at about 220°C.

The following problems arise when using this type of paints:
1. Surfaces have to be prepared by sand or shot blasting to attain a clean surface quality to grade 2 1/2 of the Swedish Norm for steel cleaning. This means almost bright steel with a surface roughness which improves paint sticking.
2. Lining application is carried out in one or more layers according to the product used, curing each layer, to obtain a thickness between 250 and 350 microns. With greater thickness the lining becomes brittle and sensible to deformations due to the pipe handling, especially bending, as the pipes are 11 to 13-m long.
3. Generally, pipes are stored in stowages until their use. The adequate tools to move them or to load them from the stowages are not always available, and it is common practice to use a lever at one end to raise the pipe to pass a sling underneath, or to move them. This may cause damage to the lining coat, leaving the steel bare or sensibly reducing the thickness of the protective coat.
4. In some cases, the fluid to be conveyed through the pipes carries solid particulates in suspension, and after a time this may erode the lining coat, drastically reducing the lining duration, because of its small thickness.

All these difficulties inclined users to prefer other types of pipes manufactured from materials with better chemical resistance and which show safer results, e.g. thermoset resins reinforced with glass fibers.

These pipes can be joined only by means of screwed joints or flanges. As fluids are conveyed with pressure between 20 and 140 bar, the wall thickness necessary for this type of materials make their cost equal or greater than a coated steel pipe. Also, these materials do not have good resistance to collapse due to external pressure or flectional fatigue, because resistance to the internal pressure is attained by crossed glass fiber meshing fixed with resin..

Other plastic materials resistant to corroding agents are polyalkylenes, which have the following temperature limits:
1. Up to 70°C of service: polyethylene
2. Up to 100°C of service: polypropylene
3. Up to 140°C of service: thermocured resins reinforced with glass fibers.

Pipes made of these plastic materials do not have enough resistance to internal pressure in standard thickness. In most cases their resistance to internal pressure is not more than 10 bar.

This problem could be solved by means of an outer metallic casing, but these plastic pipes with metallic outer reinforcement, e.g. of wire netting or helicoidal wire, are not adequate for long pipelines (several kilometers) made up of joined sections 11 to 13 m-long. This can only be practically attained using metallic pipes, seamed or seamless.

Therefore, the problem was to combine a prefabricated pipe of plastic material with a thickness not greater than the necessary to resist erosion or attacks caused by corrosive agents, with a metallic pipe, to obtain a composite pipe with good resistance to corrosion and pickling, chemical and/or mechanical, attained by the plastic material. Also, the pipe should have resistance to internal pressure as well as compression stress, this attained by the metallic pipe.

Another problem was assembling a pipeline made of metallic pipes with inner lining of plastic material, by means of sleeves or packing rings located in the joint area, and obtaining a completely smooth inner surface.

It has already been proposed to manufacture these composite pipes by inserting a prefabricated pipe of plastic material into a metallic pipe, loosely enough to allow the plastic pipe to be inserted easily, then filling up the space with an adequate material. However, if metallic pipes have a large diameter it is often difficult to obtain plastic material pipes with a diameter large enough, or the cost of the necessary tools to extrude this large diameter plastic material pipes is to expensive that advantages of this technique are offset.

This problem is solved by the present invention by means of a composite pipe formed by a metallic pipe with an inner lining resistant to corroding agents, in particular made of plastic material, the inner lining consisting of a prefabricated sleeve of plastic material which is expanded inside the metallic pipe against its interior surface, interposing an adhesive means able to transmit mechanical loads, to transmit the internal pressure inside the plastic material sleeve to the metallic pipe, preventing the plastic material sleeve collapse due to internal pressure.

A plastic material sleeve can be fabricated using conventional methods, e.g. extrusion, with adequate diameter and thickness, at a relatively reduced cost.

The prefabricated plastic material sleeve may have the most adequate thickness to resist during the necessary period the attack by chemical and/or mechanical agents contained in the fluids to be conveyed by the piping formed using the composite pipes of the present invention, so long as it maintains enough flexibility to allow its expansion against the interior surface of the metallic pipe. On the other hand, the exterior metallic part of the composite pipe shall have a thickness adequate to resist the internal pressure of the fluid to be conveyed as well as to resist compression stresses due to external loads.

The manufacturing method of a composite pipe according to this invention is characterized by inserting a prefabricated plastic sleeve into a metallic pipe, interposing an adhesive means capable to transmit mechanical loads.

In a first embodiment of the invention method, the prefabricated plastic material sleeve has an outer perimeter equal to or less than the inner perimeter of the metallic pipe. Said prefabricated plastic material sleeve, substantially folded or slightly expanded, is grasped by one of its ends and dragged into the metallic pipe, having previously applied an adhesive on its outer surface, or applying the adhesive as the sleeve is dragged into the metallic pipe. Once the prefabricated plastic material sleeve is almost or totally inserted into the metallic pipe, both ends are sealed, applying internally a fluid under pressure until the sleeve evenly abuts the inner surface of the metallic pipe. The internal pressure is maintained until the adhesive is set.

According to another embodiment of the invention, the sleeve is made from a plastic material which is sufficiently flexible to allow its being coiled for storage. The sleeve is uncoiled by means of a cylinder train. The first pair of drawing cylinders are located next to the coil to maintain the sleeve under compression. Next, a pair of forming cylinders, which have mating cylinders with respective concave and convex generatrix, between which the sleeve is curved to a semicircular shape, push the sleeve into the metallic pipe until it protrudes from the opposite end of the metallic pipe. Then the sleeve, still folded and curved in a semicircular shape, is cut between the metallic pipe and the cylinders leaving a corresponding end protruding from the metallic pipe. The sleeve is then sealed at both ends, already partially unfolded, and a heating fluid is injected with a temperature enough to provide the sleeve with sufficient flexibility to be expanded against the inner surface of the metallic pipe under hydraulic pressure.

The present invention will be further described with reference to an exemplary embodiment together with the following drawings, in which:

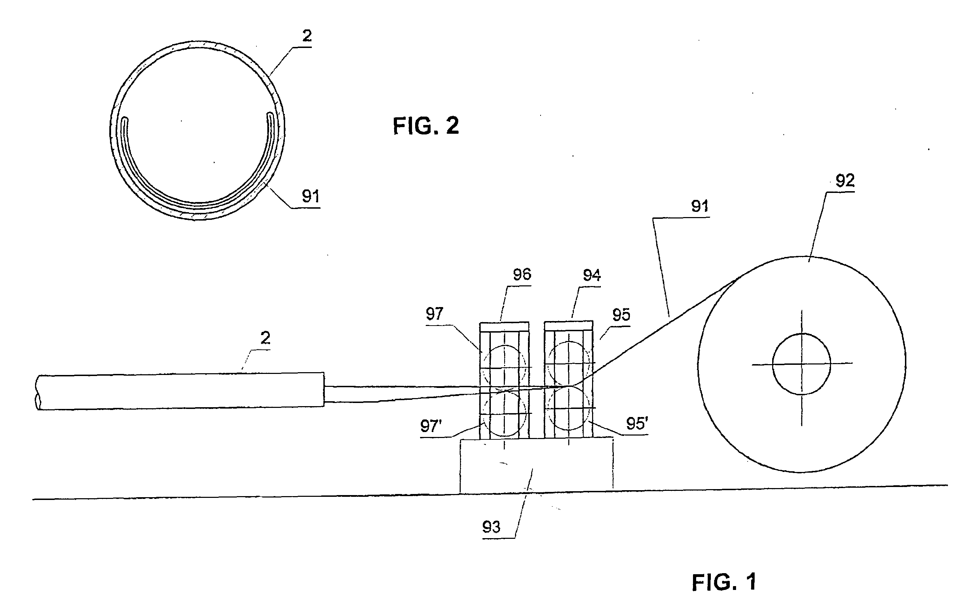

Figure 1 is an arrangement to manufacture a composite pipe.
Figure 2 is a cross section of the metallic pipe showing the step where the sleeve is being inserted.
Figure 3 shows respective flanges applied to the metallic pipe and to the sleeve.

A flexible plastic material sleeve 91 is used, folded in a coil 92.

The outer perimeter of sleeve 91 is less than or equal to the inner perimeter of the metallic pipe. The flexible plastic material sleeve 91, folded, is uncoiled from coil 92 by means of a cylinder train 93 formed by at least two pairs of cylinders. The first pair of cylinders 94, next to coil 92, is formed by two opposite cylinders 95, 95', which press sleeve 91 between them. At least a second pair of forming cylinders is constituted by an upper cylinder 97, convex-shaped, and a lower cylinder 97', concave-shaped, being the plastic material sleeve formed in the gap between both cylinders 97, 97' to a curved shape, approximately semicircular.

The metallic pipe 2 is supported on a workbench (not shown) so that one of its ends is next to and aligned with the sleeve exiting the cylinders train 93.

The cylinders train 93 uncoils sleeve 91 from coil 92 pushing it into the metallic pipe 2 until the sleeve protrudes from the opposite end.

The cylinders train 93 is then stopped, sleeve 91 is cut between the metallic pipe and the cylinders train, preferably next to the corresponding end of the metallic pipe 2. Both ends of the plastic material sleeve, which are still folded in semicircular shape, are then unfolded, and they are sealed with corresponding flanges 61, 61'. Then, the plastic material sleeve 91, already inserted into the metallic pipe, is heated by means of a heating fluid injected through at least one flange, and expanded applying pressure by means of the same heating fluid. Then the plastic material sleeve is cooled under pressure of the same fluid.

As an alternative, once the heating and pressure application stages to adapt the plastic material sleeve to the interior of the metallic pipe are finished, the injection of heating fluid is stopped, replacing it by compressed air to maintain the inner pressure during cooling stage through the walls of the plastic material sleeve.

This alternative allows the use of thinner sleeves.

### Example of application

A pipeline was build using composite pipes according to the present invention, to convey oil, comparing its behavior with a reference pipeline built by conventional techniques.

The reference pipeline had a length of 1800 meters, and was intended to convey a mixture of oil and formation water on an elevation about 100 meters over the level of a pumping station.

The steel pipe had a diameter of 30 cm, and a wall thickness of 6.35 mm. It was lined with nylon 11 with a 250-□m thickness. Before start-up, the lining was damaged trying to remove stones and boulders from the pipeline using a pipe scraper (pig).

After about four months of service, the pipeline was perforated due to local corrosion at the elevation ridge.

The area of maximum elevation suffered severe corrosion in those points where the lining had been damaged.

Corrosion was less evident in other lower places. The pipeline conveyed a flow of 6000 m³ a-day under a working pressure of 30 bar and a temperature of 30°C.

### Preliminary examination of pipeline samples

Samples of the reference piping were examined. Microscopic evaluation of the nylon 11 lining in the samples showed good adhesion to the metallic substrate. Upon separation of the lining from the steel, the steel surface was free from contamination or corrosion, having a well-defined shot blasting profile. Cross section of the lining showed about 5% porosity in closed cells with pores up to 25 □m-diameter.

The lining underwent mechanical damage, which caused scratchs on the lining which reached the metal. One 10 mm-long/3 mm-wide scratch on the lining was examined using stereoscopic magnifying glass. Upon removal of the lining, it was found that a circular corrosion hole of 10 mm in diameter and 3 mm in depth had been formed under it. The base of the hole was rounded with stepped walls.

The corrosion product present in the hole was a brown-black mass, which bubbles over slightly in 10%-acetic acid, indicating the presence of iron carbonate III base. The corrosion product was partially soluble in 10%-hydrochloric acid.

The dark matter was ferromagnetic, formed by thin needle-shaped crystals, which could have been the result of a selective corrosion in certain steel phases. The hole also contained a small quantity of earth.

When the upper layer of the corrosion product was removed, a darker glassy layer was found touching the steel. Half of the hole and surrounding steel was cut from the pipe sample, and the content of the corrosion hole was analyzed using a electronicroscope scanning by X-ray energy dispersive spectroscopy (EDS).

Elements of particular interest are shown in the following table.

| Element | Upper layer - % | Lower layer - % |
|---|---|---|
| Carbon | 1,6 | 1,9 |
| Oxygen | 1,0 | 0,8 |
| Sulfur | 0,9 | 1,3 |
| Chlorine | 7,3 | 3,3 |

The low oxygen concentration in the hole content confirmed that a great part were fragments of non-corroded steel. Carbon content confirm the presence of carbonates. The high content of chlorine was evidence of chlorine ion pickling. The sulfur content is apparently due to the presence of sulfate ions in the formation water.

The pipe sample was cut in the middle of the corroded hole and surrounding steel, it was assembled and polished in a way that allowed the steel to be examined in the interface with the corrosion product in the hole. It could be observed that corrosion advanced as deep and penetrating holes, almost as cracks, which separated as steel needles in the corrosion hole.

The surface was subject to a treatment with natal solution (nitric acid and alcohol), and examined under metallographer it showed that the corrosion process selectively destroyed the cementite phase of steel.

The corrosion process comprised an attack to the cementite particle and formation of a fracture through the ferrite until reaching the next cementite particle. The ferritic phase, which constitutes the major part of steel, has been deposited undamaged in the corrosion hole.

This corrosion process explains the speed of penetration in the pipe wall.

### Comparative Example

Composite pipes with a thickness of the inner plastic material pipe of 5 mm according to the present invention were used under similar conditions.

After 6 months of similar service, no perforation was observed. After cutting, some of the pipes showed scratchs on the plastic material, which were probably the result of abrasion caused by sand drawn by the mixture of oil and water, but none of them were deep enough to reach the steel pipe. When the plastic material was removed, no damaged could be observed on the steel pipe.

## Claims

1. A composite pipe formed by a metallic pipe with inner lining, in particular of plastic material, resistant to corroding agents, **characterized in that** said inner lining is constituted by a prefabricated plastic material sleeve which is expanded inside the metallic pipe against its inner surface, interposing an adhesive means able to transmit mechanical loads, in order to transmit the internal pressure in the plastic material sleeve to the metallic pipe, preventing collapse of the plastic material sleeve when lacking internal pressure.

2. A manufacturing method of a composite pipe according to the present invention, **characterized in that** a prefabricated plastic material sleeve in inserted into a metallic pipe, interposing an adhesive means to transmit mechanical loads.

3. The manufacturing method of a composite pipe according to claim 2, **characterized in that** the prefabricated plastic material sleeve has an outer perimeter equal to or less than the inner perimeter of the metallic pipe, being said prefabricated plastic material sleeve grasped by one of its ends and dragged into the metallic pipe, applying an adhesive on its outer surface before or during its insertion into the metallic pipe; once the prefabricated plastic material sleeve is totally inserted into the metallic pipe, or at least its greater portion, both ends are sealed and the sleeve is expanded internally using a fluid under pressure until it evenly abuts the inner surface of the metallic pipe, the pressure being maintained until curing of the adhesive.

4. The manufacturing method of a composite pipe according to claim 2, **characterized in that** the flexible plastic material sleeve with an outer perimeter slightly less than the inner perimeter of the metallic pipe, folded in a coil, is uncoiled by means of a cylinders train, with a first pair of drawing cylinders located next to the coil pressing the sleeve, and a second pair of forming cylinders, located next to the metallic pipe, which have respective concave and convex generatrix, the semicircular-shaped sleeve is inserted into the metallic pipe by the impulsion of the cylinders train until the end protrudes from the opposite end of the metallic pipe; the sleeve is then cut still folded in semicircular shape between the metallic pipe and the cylinders train, protruding the sleeve from the metallic pipe; then the sleeve is partially unfolded at both ends, sealed, and a heating fluid is injected to heat the sleeve, which is then expanded against the inner surface of the metallic pipe by means of said heating fluid under hydraulic pressure.

5. Use of a composite pipe according to claim 1 and/or manufactured by the method of claims 2 thru 4 for conveying chemical and/or mechanically aggressive fluids.
